# EUROPEAN PATENT APPLICATION

(11) **EP 4 749 444 A1**
(43) Date of publication of application: **27.05.2026**
(21) Application number: 24893177.6
(22) Date of filing: 29.10.2024
(51) Int. Cl.: G06F 9/451, G06F 3/0484

(54) **METHOD FOR SETTING WALLPAPER AND TERMINAL DEVICE**

(30) Priority: 22.11.2023 CN 202311582456
(71) Applicant: Huawei Technologies Co., Ltd., Shenzhen, Guangdong 518129 (CN)
(72) Inventor: ZHANG, Yuxi, Shenzhen, Guangdong 518129 (CN)
(74) Representative: Thun, Clemens
(86) International application number: PCT/CN2024/128204
(87) International publication number: WO 2025/108019

(57) **Abstract**

This application relates to the field of terminal technologies and provides a wallpaper setting method and a terminal device. The method includes: in response to a setting operation of setting a first image as a wallpaper of a first screen, if a control on the first screen blocks a target element in the first image when the first image is used as the wallpaper of the first screen, displaying a first interface, where the first interface includes a preview image of a second image on the first screen, the second image includes the target element, and when the second image is used as the wallpaper of the first screen, the control on the first screen does not block the target element in the second image; and setting the second image as the wallpaper of the first screen in response to a first confirmation operation. The technical solutions provided in this application mitigate a problem that during setting of a screen wallpaper, a target element in the wallpaper is blocked by a control on a screen, thereby enhancing visual appeal of the wallpaper and improving user experience.

## Description

This application claims priority to Chinese Patent Application No. 202311582456.9, filed with the China National Intellectual Property Administration on November 22, 2023 and entitled "WALLPAPER SETTING METHOD AND TERMINAL DEVICE", which is incorporated herein by reference in its entirety.

### TECHNICAL FIELD

This application relates to the terminal field, and in particular, to a wallpaper setting method and a terminal device.

### BACKGROUND

With continuous development of terminal technologies, various types of terminal devices are increasingly widely applied. A terminal device may include a screen. When using the terminal device, a user may select an image, and set the image as a wallpaper of the terminal device, for example, a lock screen wallpaper or a desktop wallpaper. However, the screen of the terminal device may include controls such as a clock, a calendar, and an icon of an application, and these controls block a part of an area of the image, reducing visual appeal of the wallpaper and degrading user experience.

In the conventional technology, a terminal device may hide or delete a control on a desktop, to prevent a part of an area of a wallpaper from being blocked. However, in this case, a user cannot view the control in a timely manner, for example, cannot view time in a timely manner. This compromises convenience of the terminal device.

### SUMMARY

In view of this, this application provides a wallpaper setting method and a terminal device, to mitigate a problem that during setting of a screen wallpaper, a target element in the wallpaper is blocked by a control on a screen, thereby enhancing visual appeal of the wallpaper and improving user experience.

To achieve the foregoing objective, according to a first aspect, an embodiment of this application provides a wallpaper setting method, where the method includes:
in response to a setting operation of setting a first image as a wallpaper of a first screen, if a control on the first screen blocks a target element in the first image when the first image is used as the wallpaper of the first screen, displaying a first interface, where the first interface includes a preview image of a second image on the first screen, the second image includes the target element, and when the second image is used as the wallpaper of the first screen, the control on the first screen does not block the target element in the second image; and setting the second image as the wallpaper of the first screen in response to a first confirmation operation.

In this embodiment of this application, in response to the setting operation of setting the first image as the wallpaper of the first screen, when the first image is used as the wallpaper of the first screen and the control on the first screen blocks the target element in the first image, a first terminal may display the first interface, to display the preview image of the second image on the first screen to the user on the first interface, where the second image includes the target element, and when the second image is used as the wallpaper of the first screen, the control on the first screen does not block the target element in the second image. Further, the first terminal may set the second image as the wallpaper of the first screen in response to the first confirmation operation. In this way, the user can view both the control on the first screen and the target element in the wallpaper. This mitigates a problem that during setting of the wallpaper of the first screen, the target element in the wallpaper is blocked by the control on the first screen, thereby enhancing visual appeal of the wallpaper and improving user experience.

In some implementations, the control may include an icon of an application, a widget, and the like. For example, icons of applications may include icons of applications such as a camera application, an album application, and a browser application. For example, the widget may include a time widget, a weather widget, a calendar widget, and the like.

In some implementations, in response to the setting operation of setting the first image as the wallpaper of the first screen, if the control on the first screen blocks the target element in the first image when the first image is used as the wallpaper of the first screen, displaying the first interface includes: in response to the setting operation, if the control on the first screen blocks the target element in the first image when the first image is used as the wallpaper of the first screen, displaying a second interface, where the second interface includes the second image and/or first indication information, and the first indication information indicates the second image; and displaying the first interface in response to a second confirmation operation received based on the second image or the first indication information.

In some implementations, the first indication information may include attribute information of the second image, for example, at least one of a geographical location corresponding to the second image, generation time of the second image, an identifier of the second image, a storage location of the second image, and a thumbnail of the second image.

When the setting operation of setting the first image as the wallpaper of the first screen is received and the control on the first screen blocks the target element in the first image, the second image or the first indication information indicating the second image may be first displayed to the user on the second interface, so that the user perceives the second image with a better visual effect that is recommended based on the current setting operation, and the user can further determine whether to proceed with setting the first image as the wallpaper of the first screen or set the recommended second image as the wallpaper of the first screen. This further improves user experience of setting the wallpaper.

In some implementations, the second interface further includes a preview image of the first image on the first screen. In some implementations, the second image or the first indication information may be located at an upper layer of the preview image. When the second interface includes both the preview image and the second image and/or the first indication information, a wallpaper effect of the first image on the first screen can be displayed to the user, and the second image can also be perceived, so that the second interface is more associated with the setting operation in the foregoing step. This further improves user experience of setting the wallpaper.

In some implementations, in response to the setting operation of setting the first image as the wallpaper of the first screen, if the control on the first screen blocks the target element in the first image when the first image is used as the wallpaper of the first screen, displaying the first interface includes: in response to the setting operation, if the control on the first screen blocks the target element in the first image when the first image is used as the wallpaper of the first screen, displaying a third interface, where the third interface includes a list of images, the list of images includes the second image, each image in the list of images includes the target element, and when each image in the list of images is used as the wallpaper of the first screen, the control on the first screen does not block the target element in each image in the list of images; and displaying the first interface in response to a third confirmation operation received based on the second image.

In response to the setting operation of setting the first image as the wallpaper of the first screen, when it is determined that the first image is used as the wallpaper of the first screen and the control on the first screen blocks the target element in the first image, the list of images may be first displayed, to display at least one image such as the second image to the user, so that the user perceives the at least one image with a better visual effect that is recommended based on the current setting operation, and the user can further determine whether to proceed with setting the first image as the wallpaper of the first screen or select the recommended image from the list of images as the wallpaper of the first screen. This further improves user experience of setting the wallpaper.

In some implementations, a plurality of images in the list of images may be sorted in a preset manner, and an image with a higher priority is placed closer to the beginning of the list. In some implementations, a priority of each image in the list of images may match a similarity between the image and the first image. A higher similarity between the image and the first image indicates a ranking of the image closer to the beginning of the list of images. In some implementations, the similarity between the image and the first image may include a similarity between image content of the image and image content of the first image, and/or a similarity between attribute information of the image and attribute information of the first image.

In some implementations, the third interface further includes the preview image of the first image on the first screen. In some implementations, the list of images may be located at the upper layer of the preview image. When the second interface includes both the preview image and the list of images, a wallpaper effect of the first image on the first screen can be displayed to the user, and the list of images can also be perceived, so that the second interface is more associated with the setting operation in the foregoing step. This further improves user experience of setting the wallpaper.

In some implementations, the target element includes at least a part of facial features.

In some implementations, the setting operation is further used to set the first image as a wallpaper of a second screen, and when the first image is used as the wallpaper of the second screen, a control on the second screen does not block the target element in the first image; and the method further includes: setting the first image as the wallpaper of the second screen in response to the first confirmation operation.

When a control on another screen other than the first screen in a plurality of screens blocks the target element in the first image, in response to the first confirmation operation, the first terminal may set the second image as the wallpaper of the first screen and set the first image as a wallpaper of the another screen in the plurality of screens.

In some implementations, after displaying the first interface, the method further includes: in response to a first switching operation, switching to display a fourth interface, where the fourth interface includes the preview image of the first image on the second screen.

In some implementations, the setting operation is further used to set the first image as a wallpaper of a third screen; and the method further includes: in response to the setting operation, if a control on the third screen blocks the target element in the first image when the first image is used as the wallpaper of the third screen, obtaining a third image, where the third image includes the target element, and when the third image is used as the wallpaper of the third screen, the control on the third screen does not block the target element in the third image; and setting the third image as the wallpaper of the third screen in response to the first confirmation operation.

In some implementations, the second image and the third image may be a same image.

When a control on each screen in the plurality of screens blocks the target element in the first image, the first terminal may obtain, for each screen in response to the first confirmation operation, a new image that includes the target element and in which the target element is not blocked by the screen, and set the newly obtained image as a wallpaper of the screen, but not set the first image as a wallpaper of any of the plurality of screens.

When controls on some of the plurality of screens block the target element in the first image, and controls on the other screens do not block the target element in the first image, the first terminal may obtain, for each screen in the some screens in response to the first confirmation operation, a new image that includes the target element and in which the target element is not blocked by the screen, and set the newly obtained image as a wallpaper of the screen, and for each screen in the other screens, set the first image as a wallpaper of each screen.

In some implementations, after displaying the first interface, the method further includes: in response to a second switching operation, switching to display a fifth interface, where the fifth interface includes a preview image of the third image on the third screen.

In some implementations, the method includes: identifying the target element in the first image; or obtaining the target element selected by a user from the first image.

For example, the first terminal may identify at least a part of facial features in the first image, and determine the at least part of identified facial features as the target element. Alternatively, the first terminal may determine a main or important element in the first image as the target element. Alternatively, the first terminal may determine, as the target element, an element that is in the first image and that carries a large quantity of visual information or a largest quantity of visual information. Alternatively, the first terminal may determine an element with high aesthetic significance in the first image as the target element. Alternatively, the first terminal determines, as the target element, an element that is at a specific location like a central location of the first image.

In some implementations, a difference between an aspect ratio of the first screen and an aspect ratio of the second image is less than or equal to a first value.

In some implementations, the first screen is a screen present when the first terminal is in a first folded state, the second screen is a screen present when the first terminal is in a second folded state, and the third screen is a screen present when the first terminal is in a second folded state. It may be understood that the first folded state, the second folded state, and the third folded state are used to distinguish between states that may occur in a folding process of the first terminal, but are not used to limit a specific form of the first terminal.

In some implementations, any one of the first screen, the second screen, and the third screen is a screen present when the first terminal is in a landscape display mode, and another of the first screen, the second screen, and the third screen is a screen present when the first terminal is in a portrait display mode. Alternatively, any one of the first screen, the second screen, and the third screen is a screen present when the first terminal is in a portrait display mode, and another of the first screen, the second screen, and the third screen is a screen present when the first terminal is in a landscape display mode.

In some implementations, the first screen is a screen of the first terminal, the second screen is a screen of a second terminal, and the third screen is a screen of a third terminal.

In some implementations, the first interface may include at least a part of the second image. In some implementations, the first interface includes superposition of the second image and the control on the first screen, to help the user intuitively observe how the control on the first screen blocks the second image when the second image is used as the wallpaper of the first screen.

In some implementations, the first interface includes an identifier of the first screen.

In some implementations, the first terminal may determine a location of the control on the first screen and a location of the target element in the first image. When the first image is used as the wallpaper of the first screen, and the location of the control on the first screen overlaps or partially overlaps the location of the target element in the first image, the first terminal determines that the control on the first screen blocks the target element in the first image. In some implementations, the location of the control on the first screen and the location of the target element in the first image may be relative locations corresponding to the first screen.

In some implementations, a coordinate system corresponding to the first screen may be established based on pixels of the first screen or a cell that is on the first screen and that is used to place a control. Any location on the first screen may be represented by using coordinates in the coordinate system. The location of the control on the first screen may be represented as a first coordinate set, and the location of the target element in the first image may be represented as a second coordinate set. If the first coordinate set and the second coordinate set include at least some same coordinates, it may be determined that the control on the first screen blocks the target element in the first image. If the first coordinate set and the second coordinate set do not include the same coordinates, it may be determined that the control on the first screen does not block the target element in the first image.

In some implementations, the first terminal may superimpose the first image on a screen layout of the first screen, to obtain the preview image of the first image on the first screen. When the control on the first screen blocks the target element in the first image, a target element in the preview image cannot be identified. When the control on the first screen does not block the target element in the first image, the preview image may include a complete and clear target element, so that the target element can be identified from the preview image. Therefore, if the preview image does not include the target element, it is determined that the control on the first screen blocks the target element in the first image. If the preview image includes the target element, it is determined that the control on the first screen does not block the target element in the first image.

According to a second aspect, an embodiment of this application provides a wallpaper setting apparatus, where the apparatus includes:
a display module, configured to: in response to a setting operation of setting a first image as a wallpaper of a first screen, if a control on the first screen blocks a target element in the first image when the first image is used as the wallpaper of the first screen, display a first interface, where the first interface includes a preview image of a second image on the first screen, the second image includes the target element, and when the second image is used as the wallpaper of the first screen, the control on the first screen does not block the target element in the second image; and
a setting module, configured to set the second image as the wallpaper of the first screen in response to a first confirmation operation.

According to a third aspect, an embodiment of this application provides a terminal device, including a memory and a processor, where the memory is configured to store a computer program, and when the computer program is invoked, the processor is configured to perform the method according to any implementation of the first aspect.

According to a fourth aspect, an embodiment of this application provides a chip system, where the chip system includes a processor, the processor is coupled to a memory, and the processor executes a computer program stored in the memory, to implement the method according to any implementation of the first aspect.

The chip system may be a single chip or a chip module including a plurality of chips.

According to a fifth aspect, an embodiment of this application provides a computer-readable storage medium, where the computer-readable storage medium stores a computer program, and when the computer program is executed by a processor, the method according to any implementation of the first aspect is implemented.

According to a sixth aspect, an embodiment of this application provides a computer program product, where when the computer program product runs on a terminal device, the terminal device is caused to perform the method according to any implementation of the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a diagram of a structure of a terminal device according to an embodiment of this application;
FIG. 2 is a diagram of a display screen according to an embodiment of this application;
FIG. 3 is a diagram of another display screen according to an embodiment of this application;
FIG. 4 is a diagram of a display interface according to an embodiment of this application;
FIG. 5 is a schematic flowchart of a wallpaper setting method according to an embodiment of this application;
FIG. 6 is a diagram of another display interface according to an embodiment of this application;
FIG. 7a to FIG. 7d are a diagram of another display interface according to an embodiment of this application;
FIG. 8 is a diagram of another display interface according to an embodiment of this application;
FIG. 9 is a schematic flowchart of another wallpaper setting method according to an embodiment of this application;
FIG. 10 is a diagram of another display interface according to an embodiment of this application;
FIG. 11 is a schematic flowchart of another wallpaper setting method according to an embodiment of this application;
FIG. 12a to FIG. 12c are a diagram of another display interface according to an embodiment of this application;
FIG. 13 is a schematic flowchart of another wallpaper setting method according to an embodiment of this application;
FIG. 14 is a diagram of another display interface according to an embodiment of this application;
FIG. 15 is a schematic flowchart of another wallpaper setting method according to an embodiment of this application; and
FIG. 16 is a diagram of another display interface according to an embodiment of this application.

### DESCRIPTION OF EMBODIMENTS

A wallpaper setting method provided in embodiments of this application may be applied to a terminal device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

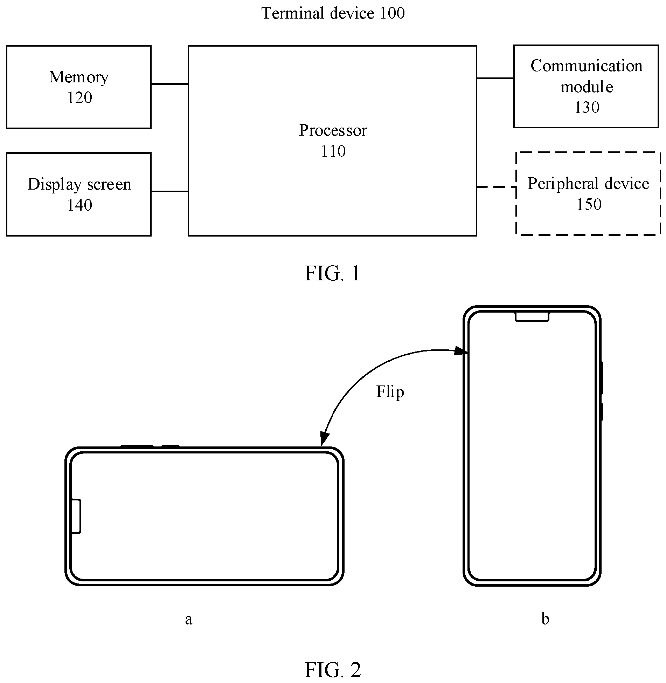

FIG. 1 is a diagram of a structure of a terminal device 100 according to an embodiment of this application. The terminal device 100 may include a processor 110, a memory 120, a communication module 130, a display screen 140, and the like.

The processor 110 may include one or more processing units. The memory 120 is configured to store program code and data. In this embodiment of this application, the processor 110 may execute computer-executable instructions stored in the memory 120, to control and manage an action of the terminal device 100.

The communication module 130 may be used for communication between internal modules of the terminal device 100, communication between the terminal device 100 and another external terminal device, or the like. For example, if the terminal device 100 communicates with the another terminal device in a wired connection manner, the communication module 130 may include an interface, for example, a USB interface. The USB interface may be an interface that conforms to a USB standard specification, and may be specifically a mini USB interface, a micro USB interface, a USB Type-C interface, or the like. The USB interface may be configured to connect to a charger to charge the terminal device 100, or may be configured to exchange data between the terminal device 100 and a peripheral device, or may be configured to connect to a headset for playing an audio through the headset. Alternatively, the interface may be configured to connect to another terminal device, for example, an AR device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like, and interaction between the terminal device 100 and the another terminal device may be implemented in a plurality of different manners.

The display screen 140 may also be referred to as a screen, and is configured to display an image, a video, or the like on a human-computer interaction interface.

In some implementations, the terminal device 100 may include one or N display screens 140, where N is a positive integer greater than 1. In some implementations, the terminal device 100 includes a plurality of surfaces, and one or more of the plurality of surfaces may include one display screen 140.

In some implementations, the terminal device 100 may include a landscape display mode and a portrait display mode, and an aspect ratio of the display screen 140 present when the terminal device 100 is in the landscape display mode is different from an aspect ratio of the display screen 140 present when the terminal device 100 is in the portrait display mode. For example, the aspect ratio of the display screen 140 present when the terminal device 100 is in the landscape display mode may be 21:9, and the aspect ratio of the display screen 140 present when the terminal device 100 is in the portrait display mode may be 9:21. In some implementations, a display screen 140 present when the terminal device 100 is in the landscape display mode (as shown in a in FIG. 2) and a display screen 140 present when the terminal device 100 is in the portrait display mode (as shown in b in FIG. 2) may be considered as two different display screens. In some implementations, the terminal device 100 may identify a posture change of the terminal device 100 based on a gravity change of the terminal device 100, to implement automatic switching between the landscape display mode and the portrait display mode when the terminal device 100 is flipped. In some implementations, the terminal device 100 may switch to the landscape display mode in response to an operation of setting landscape display by a user, or switch to the portrait display mode in response to an operation of setting portrait display by a user.

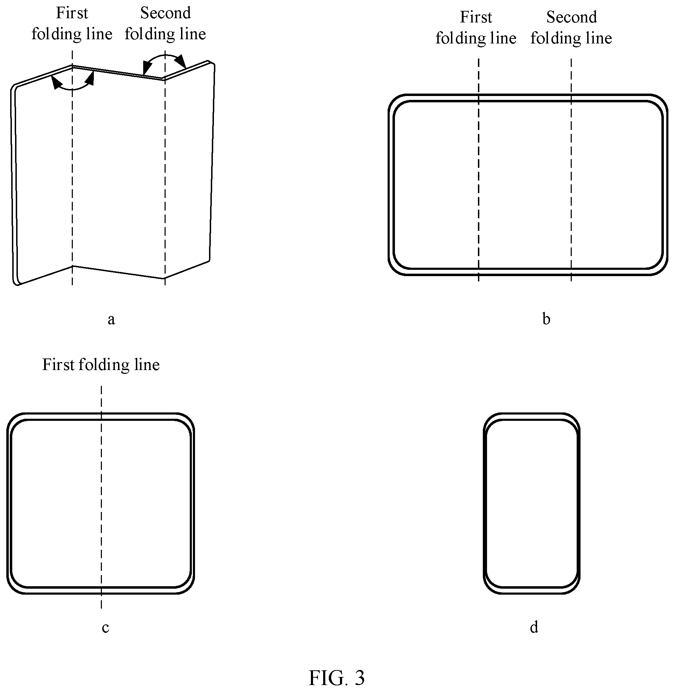

In some implementations, the display screen 140 may be a foldable screen, and the terminal device 100 may be a foldable device. The terminal device 100 may have a plurality of folded states. When the terminal device 100 is in different folded states, the display screen 140 may be folded or unfolded, so that different display areas of the display screen 140 are combined or separated, to form different display screens. For example, as shown in a in FIG. 3, the display screen 140 is a tri-fold screen and can be folded along a first folding line and/or a second folding line, and the two folding lines split the display screen 140 into three subscreens. When the display screen 140 is in an unfolded state, as shown in b in FIG. 3, the three subscreens are combined into a larger display screen. When the display screen 140 is unfolded along the first folding line and is folded along the second folding line (that is, in a half-folded state), as shown in c in FIG. 3, a right subscreen of the display screen 140 is folded and hid, and a left subscreen and a middle subscreen of the display screen 140 are combined into a medium-sized display screen. When the display screen 140 is folded along the first folding line and the second folding line (that is, in a folded state), as shown in d in FIG. 3, the left subscreen and the middle subscreen of the display screen 140 are folded and hid, and the right subscreen of the display screen 140 may be used as a small display screen. It may be understood that in this embodiment of this application, FIG. 3 is merely used as an example to describe some possible cases in which the display screen 140 is a foldable screen and the terminal device 100 is a foldable device, and imposes no limitation on a quantity of folding lines, a folding angle, and a folding manner included in the display screen 140. For example, the display screen 140 may include only one folding line, that is, the display screen 140 may be a bi-fold screen.

Optionally, the terminal device 100 may further include a peripheral device 150, for example, a mouse, a keyboard, a speaker, or a microphone.

It should be understood that, in addition to various components or modules shown in FIG. 1, the structure of the terminal device 100 is not specifically limited in embodiments of this application. In some other embodiments of this application, the terminal device 100 may further include more or fewer components than those shown in the figure, or a combination of some components, or splits from some components, or a different component layout. The components shown in the figure may be implemented by hardware, software, or a combination of software and hardware.

For ease of understanding the technical solutions in embodiments of this application, the following first describes an application scenario of embodiments of this application.

With continuous development of terminal technologies, various types of terminal devices are increasingly widely applied. A terminal device may include a screen. When using the terminal device, a user may select an image, and set the image as a wallpaper of the terminal device, for example, a lock screen wallpaper or a desktop wallpaper. However, the screen of the terminal device may include controls such as a clock, a calendar, and an icon of an application, and these controls block a part of an area of the image, reducing visual appeal of the wallpaper and degrading user experience.

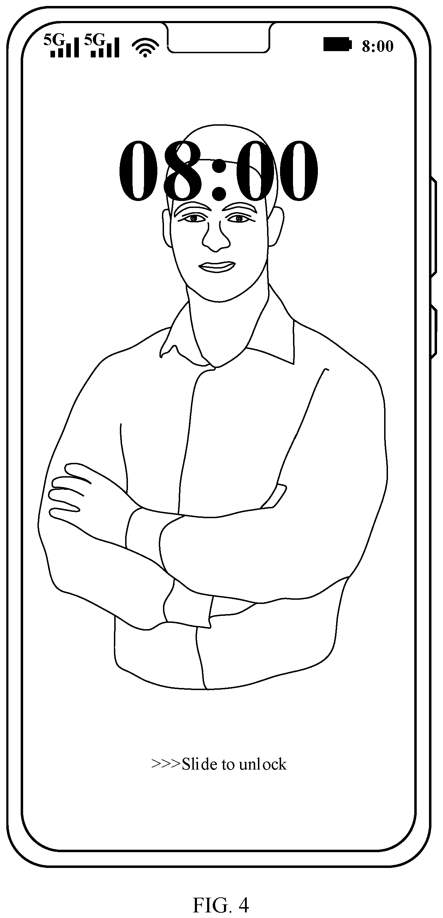

For example, as shown in FIG. 4, the user sets a photo as a lock screen wallpaper of a mobile phone. In a lock screen state, the screen includes a clock control, and the clock control blocks a head of a person in the lock screen wallpaper, reducing visual appeal of the lock screen wallpaper.

In some implementations, the terminal device may hide or delete a control on a desktop, to prevent a part of an area of a wallpaper from being blocked. However, in this case, the user cannot view the control in a timely manner, for example, cannot view time in a timely manner. This compromises convenience of the terminal device.

In some implementations, the user or the terminal device may move or crop an image to be set as a wallpaper, so that some areas of a moved or cropped wallpaper avoid a control on the screen. However, this operation process is complex, and efficiency of setting the wallpaper is low. In addition, if the user needs to set a wallpaper of a plurality of screens, the wallpaper needs to be moved or cropped for each screen because each screen has a different screen layout, including a quantity of controls and a location of each control. A larger quantity of screens indicates longer duration required for setting the wallpaper.

To resolve at least some of the foregoing technical problems, an embodiment of this application provides a wallpaper setting method. Specific embodiments are used below to describe in detail the technical solutions of this application. The following specific embodiments may be combined with each other, and a same or similar concept or process may not be described repeatedly in some embodiments.

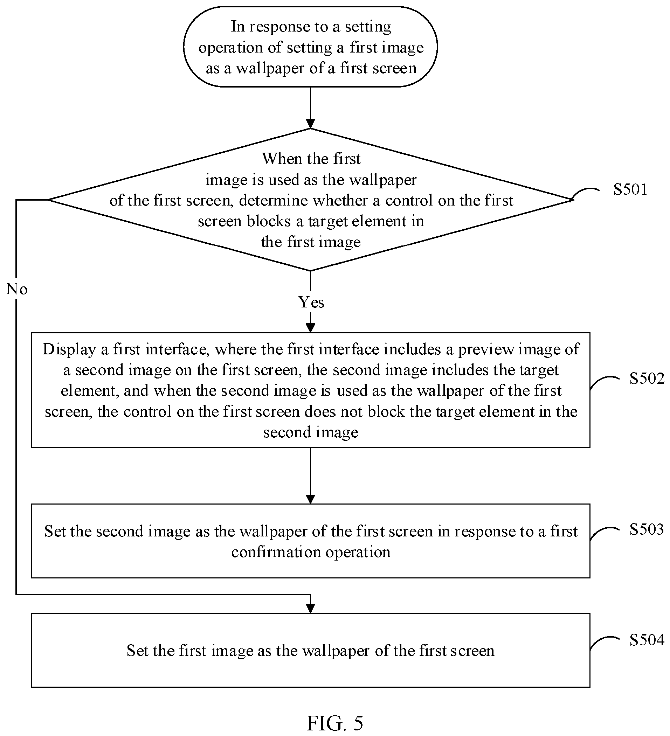

FIG. 5 is a flowchart of a wallpaper setting method according to an embodiment of this application. The method may be used by a first terminal to set a wallpaper of a first screen, that is, set a wallpaper of a screen. It should be noted that the method is not limited to a specific sequence described in FIG. 5 and below. It should be understood that, in another embodiment, a sequence of some steps in the method may be exchanged based on an actual requirement, or some steps in the method may be omitted or deleted. The method includes the following steps.

S501: In response to a setting operation of setting a first image as the wallpaper of the first screen, when the first image is used as the wallpaper of the first screen, the first terminal determines whether a control on the first screen blocks a target element in the first image; and if the control on the first screen blocks the target element in the first image, performs S502; or if the control on the first screen does not block the target element in the first image, performs S504.

If the first terminal detects the setting operation of setting the first image as the wallpaper of the first screen by a user, in order to mitigate a problem that the control on the first screen blocks the first image, enhance visual appeal of the wallpaper, and improve user experience, when the first image is used as the wallpaper of the first screen, the terminal device may determine whether the control on the first screen blocks the target element in the first image.

The first image may be an image selected by the user, and the first screen may be a to-be-set screen. In some implementations, the first screen may be a screen determined by the user from a plurality of screens. In some implementations, the first screen may be a screen of the first terminal or a screen of another second terminal or third terminal. In some implementations, the second terminal may be associated with the first terminal. For example, the second terminal and the first terminal correspond to a unified user account, or the second terminal is communicatively connected to the first terminal. In some implementations, the first screen may be a screen present when the first terminal is in a specific state. For example, the first screen may be a screen present when the first terminal is in any folded state, or the first screen may be a screen present when the first terminal is in a landscape display mode or a portrait display mode.

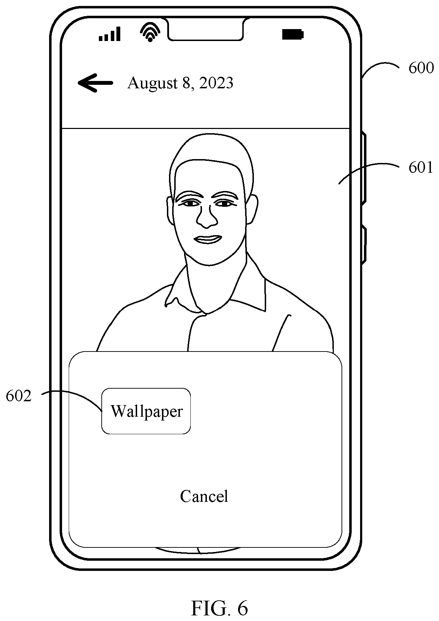

In some implementations, the first terminal may first determine the first image, and then receive, based on the first image, the setting operation of setting the first image as the wallpaper of the first screen. For example, the user browses an album by using the first terminal. The album includes a plurality of images. During displaying of the first image, the first terminal further displays a "More" button. When receiving a tap operation of the user on the "More" button, the first terminal may display a wallpaper setting interface 600, as shown in FIG. 6. The wallpaper setting interface 600 includes a first image 601 and a "Wallpaper" option 602. When receiving a tap operation of the user on the "Wallpaper" option 602, the first terminal determines that a setting operation of setting the first image 601 as the wallpaper of the first screen is received. The first screen may be a screen on which the first terminal currently receives the tap operation on the "Wallpaper" option 602, or the first screen may be a unique screen of the first terminal. Alternatively, when receiving a tap operation of the user on the "Wallpaper" option 602, the first terminal further displays a plurality of screen options to the user, and receives the first screen selected by the user from the plurality of screens. It may be understood that a manner in which the first terminal receives the setting operation of setting the first image as the wallpaper of the first screen is not limited in this application.

In some implementations, the control on the first screen may include an icon of an application, a widget, and the like. For example, icons of applications may include icons of applications such as a camera application, an album application, and a browser application. For example, the widget may include a time widget, a weather widget, a calendar widget, and the like.

An element in an image may include a point, a line, a surface, or a combination thereof, and the element may carry specific visual information. For example, the element may include a person, an object, an animal, a plant, a building, and the like. The target element in the first image may include at least some elements in the first image. In some implementations, the target element may be a main or important element in the first image. For example, when the first image is a person or an animal, the target element may include at least a part of facial features; or when the first image is a landscape image, the target element may include trees, flowers, mountains, bodies of water, and the like. In some implementations, the target element may be an element that is in the first image and that carries a large quantity of visual information or a largest quantity of visual information. In some implementations, the target element may be an element with high aesthetic significance in the first image. In some implementations, the target element may be an element that is in the first image and that the user is interested in. It may be understood that, during actual application, the target element may alternatively be an element that has a feature different from that of another element in the first image.

In some implementations, the first terminal may determine, based on a location of the target element in the first image and a location of the control on the first screen, whether the control on the first screen blocks the target element in the first image.

In addition, for a manner in which the first terminal determines whether the control on the first screen blocks the target element in the first image, refer to the following detailed descriptions.

S502: The first terminal displays a first interface, where the first interface includes a preview image of a second image on the first screen, the second image includes the target element, and when the second image is used as the wallpaper of the first screen, the control on the first screen does not block the target element in the second image.

If the user sets the first image as the wallpaper of the first screen, and the control on the first screen blocks the target element in the first image when the second image is used as the wallpaper of the first screen, in order to mitigate a problem that the target element in the wallpaper is blocked by the control on the first screen, the first interface may be displayed, and the preview image of the second image on the first screen is displayed on the first interface, to help the user preview a visual effect of using the second image as the wallpaper of the first screen.

In some implementations, the first interface may include at least a part of the second image. In some other implementations, the first interface may include superposition of the at least part of the second image and the control on the first screen, to help the user intuitively observe how the control on the first screen blocks the second image when the second image is used as the wallpaper of the first screen.

In some implementations, the first terminal may not display the control on the first screen on the first interface in response to an operation of hiding the control on the first screen, and may display the control on the first screen on the first interface in response to an operation of displaying the control on the first screen.

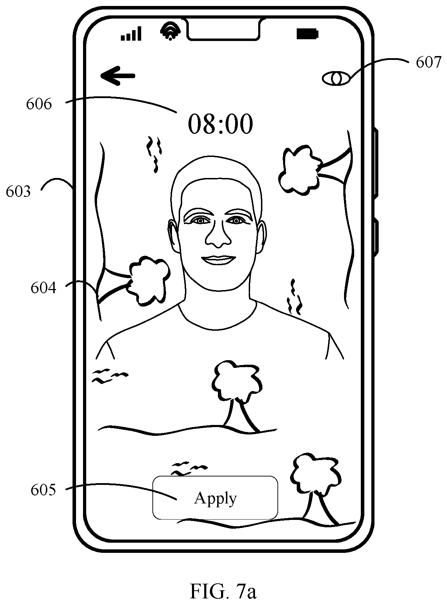

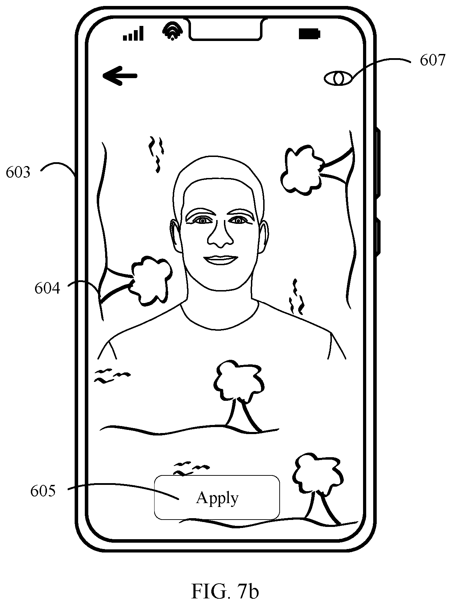

For example, when the first terminal receives the tap operation of the user on the "Wallpaper" option 602 on the wallpaper setting interface 600 shown in FIG. 6, and the control on the first screen blocks a facial region in the first image 601, the first terminal may display the first interface 603, as shown in FIG. 7a. The facial region in the first image 601 is the target element. The first interface 603 may include a second image 604, an "Apply" button 605, and a time control 606. The first interface 603 shows that the second image 604 and the first image 601 include a same facial feature of a person, and the time control 606 on the first screen does not block the facial feature of the person in the second image 604. The first interface 603 may further include a "Hide" button 607. When receiving a tap operation of the user on the "Hide" button 607, the first terminal may hide a control like the time control 606 on the first screen. As shown in FIG. 7b, when receiving a tap operation of the user on the "Hide" button 607 again, the first terminal may display the control like the time control 606 on the first screen.

In some implementations, the first interface may include second indication information, and the second indication information may indicate that the second image is a wallpaper recommended for the first screen. In some implementations, the second indication information may indicate a reason and a basis for recommending the second image, a difference between the second image and the first image, and the like.

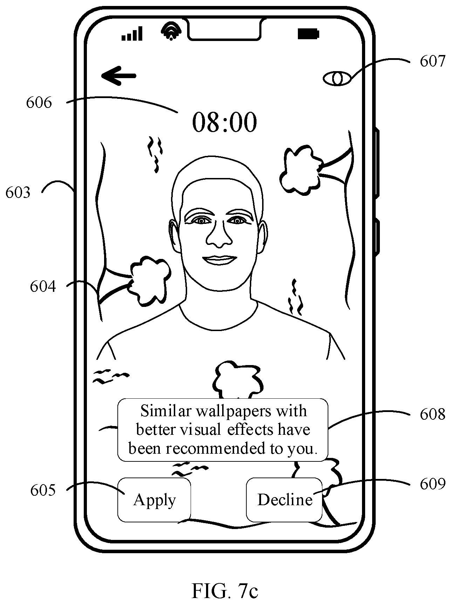

For example, as shown in FIG. 7c, the first interface 603 includes second indication information 608. The second indication information 608 includes "Similar wallpapers with better visual effects have been recommended to you." The user may determine, based on the second indication information 608, that the second image is an image with a better visual effect that is recommended based on behavior of setting the first image as the wallpaper of the first screen.

In some implementations, the first interface may include an identifier of the first screen, to indicate that the first interface displays a preview interface corresponding to the first screen. In some implementations, the identifier of the first screen may include a text, a symbol, a picture, or a graph that indicates the first screen.

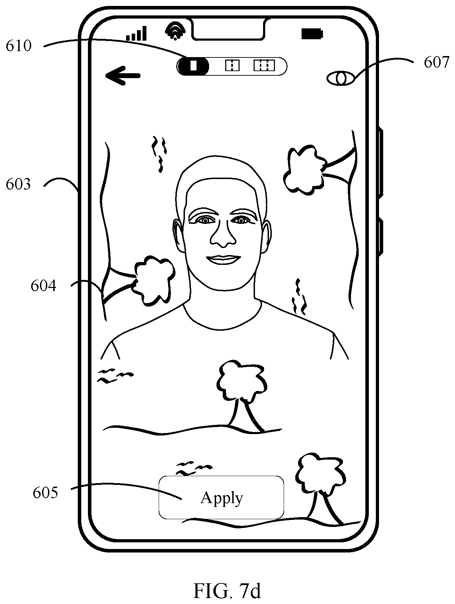

For example, as shown in FIG. 7d, the first interface 603 includes an identifier 610 of the first screen. The identifier 610 of the first screen includes a visually distinguished rectangular box whose aspect ratio is similar to that of the first screen, and may indicate that the first screen is a screen in a folded state.

In some implementations, the first terminal may display a sixth interface in response to a setting operation that the user declines to set the second image as the wallpaper of the first screen, where the sixth interface may include a preview image of the first image on the first screen.

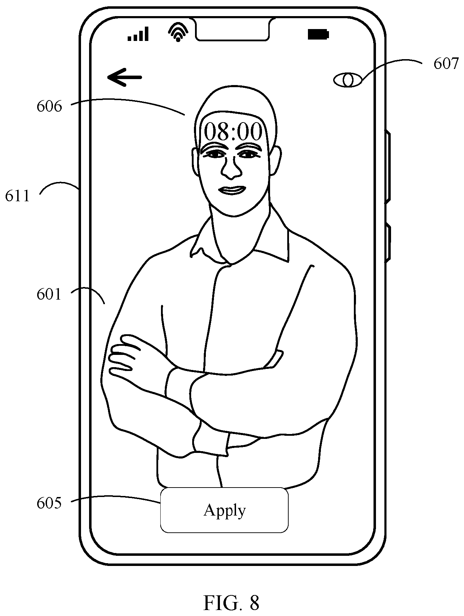

For example, as shown in FIG. 7c, the first interface 603 includes a "Decline" button 609. When receiving a tap operation of the user on the "Decline" button 609, the first terminal may display a sixth interface 611, as shown in FIG. 8. The sixth interface 611 includes a preview image of the first image 601 on the first screen.

In some implementations, during displaying of the first interface, the first terminal may update, in response to an editing operation of the user on the second image, a part that is of the second image and that is on the first screen, to update the preview image of the second image on the first screen. For example, the second image is moved, scaled, rotated, or mirror-flipped.

S503: The first terminal sets the second image as the wallpaper of the first screen in response to a first confirmation operation.

The first confirmation operation may be used to trigger setting the second image as the wallpaper of the first screen.

For example, when receiving a tap operation of the user on the "Apply" button 605 on the first interface 603 shown in FIG. 7a to FIG. 7d, the first terminal may set the second image 604 on the first interface 603 as the wallpaper of the first screen.

In some implementations, the first terminal may set, based on the preview image that is of the second image on the first screen and that is shown on the first interface, at least a part that is of the second image and that is currently located in the preview image as the wallpaper of the first screen. In some other implementations, when the user performs an editing operation on the second image to update the preview image of the second image on the first screen, the first terminal may set at least a part of an updated preview image of the second image as the wallpaper of the first screen.

In some implementations, if the control on the first screen blocks the target element in the first image, the second image may be alternatively directly set as the wallpaper of the first image, so that the step of displaying the first interface in S502 and the step of receiving the first confirmation operation of the user in S503 are omitted.

S504: The first terminal sets the first image as the wallpaper of the first screen.

When the user sets the first image as the wallpaper of the first screen, and the control on the first screen blocks the target element in the first image, the first terminal may directly set the first image as the wallpaper of the first screen.

In some implementations, when the user sets the first image as the wallpaper of the first screen, and the control on the first screen blocks the target element in the first image, the first terminal may alternatively display the sixth interface, where the sixth interface includes the preview image of the first image on the first screen. In some implementations, the sixth interface may include superposition of the first image and the control on the first screen, to help the user intuitively observe how the control on the first screen blocks the first image. The first terminal may set the first image as the wallpaper of the first screen in response to a fourth confirmation operation, where the fourth confirmation operation may be used to trigger setting the first image as the wallpaper of the first screen.

For example, when receiving a tap operation of the user on the "Apply" button 605 on the sixth interface 611 shown in FIG. 8, the first terminal sets the first image as the wallpaper of the first screen. Alternatively, when receiving a tap operation of the user on the "Decline" button 609 on the first interface 603 shown in FIG. 7c, the first terminal sets the first image as the wallpaper of the first screen, and no longer displays the sixth interface 611.

In some implementations, during displaying of the sixth interface, the first terminal may adjust the first image in response to an editing operation of the user on the first image, to update the preview image of the first image on the first screen. For example, the first image is moved, scaled, rotated, or mirror-flipped.

In some implementations, after displaying the first interface, the first terminal may display the sixth interface in response to a third switching operation; or after displaying the sixth interface, the first terminal may display the first interface in response to a fourth switching operation. In other words, the first terminal may alternately display the first interface and the sixth interface, to more intuitively display a difference between a wallpaper effect of setting the first image as the wallpaper of the first screen and a wallpaper effect of setting the second image as the wallpaper of the first screen to the user, so that in addition to being presented with a wallpaper of a better visual effect that is recommended to the user, the user can select a wallpaper based on a personal preference. This further improves user experience.

With reference to S501 to S504, FIG. 6, FIG. 7a to FIG. 7d, and FIG. 8, when the user sets the first image as the wallpaper of the first screen, the first terminal may include the following possible setting procedures:

A setting procedure may include FIG. 6. When the user sets, on the wallpaper setting interface shown in FIG. 6, the first image as the wallpaper of the first screen, and the control on the first screen does not block the target element in the first image, the first terminal may directly set the first image as the wallpaper of the first screen.

Another setting procedure may include FIG. 6 and FIG. 8. When the user sets, on the wallpaper setting interface shown in FIG. 6, the first image as the wallpaper of the first screen, and the control on the first screen does not block the target element in the first image. The first terminal may display the first image to the user on the sixth interface shown in FIG. 8 so that the user previews a wallpaper effect, and then set the first image as the wallpaper of the first screen.

Another setting procedure may include FIG. 6 to FIG. 7d. The user sets, on the wallpaper setting interface shown in FIG. 6, the first image as the wallpaper of the first screen. Because the control on the first screen blocks the target element in the first image, the first terminal may display the second image to the user on the first interface shown in FIG. 7a to FIG. 7d so that the user previews a wallpaper effect, and then set the second image as the wallpaper of the first screen.

Another setting procedure may include FIG. 6, FIG. 7a to FIG. 7d, and FIG. 8. The user sets, on the wallpaper setting interface shown in FIG. 6, the first image as the wallpaper of the first screen. Because the control on the first screen blocks the target element in the first image, the first terminal may preferentially display the second image to the user on the first interface shown in FIG. 7a to FIG. 7d, so that the user previews a wallpaper effect. In addition, the first terminal may further switch to FIG. 8, to display the first image to the user, so that the user compares effects of separately setting the first image and the second image as the wallpaper of the first screen. The first terminal may set the first image or the second image as the wallpaper of the first screen.

In this embodiment of this application, in response to the setting operation of setting the first image as the wallpaper of the first screen, when the first image is used as the wallpaper of the first screen and the control on the first screen blocks the target element in the first image, the first terminal may display the first interface, to display the preview image of the second image on the first screen to the user on the first interface, where the second image includes the target element, and when the second image is used as the wallpaper of the first screen, the control on the first screen does not block the target element in the second image. Further, the first terminal may set the second image as the wallpaper of the first screen in response to the first confirmation operation. In this way, the user can view both the control on the first screen and the target element in the wallpaper. This mitigates a problem that during setting of the wallpaper of the first screen, the target element in the wallpaper is blocked by the control on the first screen, thereby enhancing visual appeal of the wallpaper and improving user experience.

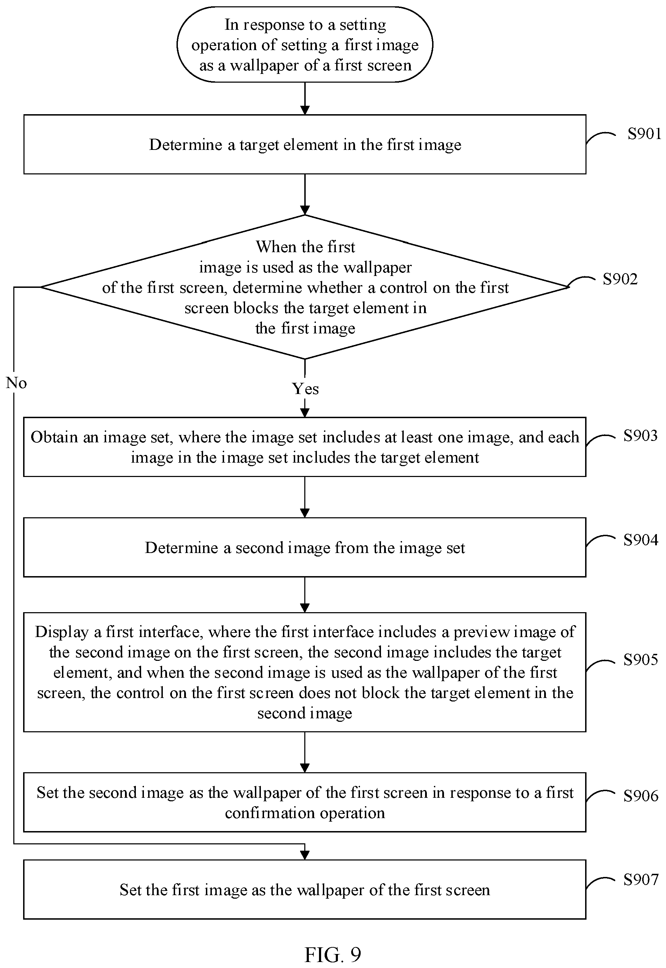

FIG. 9 is a flowchart of a wallpaper setting method according to an embodiment of this application. The method provides a detailed description of the method in FIG. 5 by identifying whether an image includes a target element, and determining whether a control on a screen blocks the target element when the image is used as a wallpaper of the screen. It should be noted that the method is not limited to a specific sequence described in FIG. 9 and below. It should be understood that, in another embodiment, a sequence of some steps in the method may be exchanged based on an actual requirement, or some steps in the method may be omitted or deleted. The method includes the following steps.

S901: In response to a setting operation of setting a first image as a wallpaper of a first screen, a first terminal determines a target element in the first image.

In some implementations, the first terminal may automatically identify the target element in the first image. In some implementations, the first terminal may obtain a feature of the target element and/or a strategy for identifying the target element, and then identify the target element in the first image based on the feature of the target element and/or the strategy for identifying the target element.

For example, the first terminal may identify at least a part of facial features in the first image, and determine the at least part of identified facial features as the target element. Alternatively, the first terminal may determine a main or important element in the first image as the target element. Alternatively, the first terminal may determine, as the target element, an element that is in the first image and that carries a large quantity of visual information or a largest quantity of visual information. Alternatively, the first terminal may determine an element with high aesthetic significance in the first image as the target element. Alternatively, the first terminal determines, as the target element, an element that is at a specific location like a central location of the first image.

In some implementations, the first terminal may obtain the target element selected by a user from the first image. In some implementations, the first terminal may display an element selection interface, where the element selection interface may include the first image; and the first terminal receives, on the element selection interface, the target element selected by the user. In some implementations, the element selection interface may further include third indication information, and the third indication information may indicate the user to select the target element.

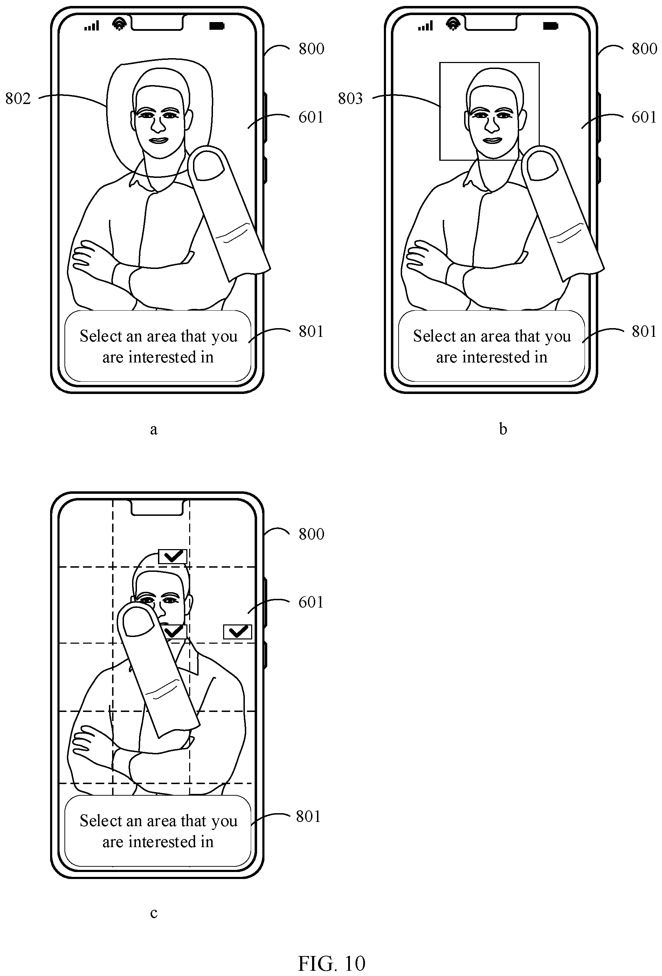

For example, when receiving a tap operation of the user on a "Wallpaper" option 602 in FIG. 6, the first terminal may display an element selection interface 800, as shown in FIG. 10. The element selection interface 800 includes third indication information 801 and a first image 601, and the third indication information 801 is "Select an area that you are interested in".

On the element selection interface 800 shown in a in FIG. 10, the user may slide on the element selection interface 800 to form a sliding trajectory 802. The first terminal may determine an element in the sliding trajectory 802 as the target element.

The element selection interface 800 shown in b in FIG. 10 further includes a rectangular selection box 803. The user may drag and scale the selection box 803. The first terminal may determine an element in the selection box 803 as the target element. In addition, it may be understood that, during actual application, the selection box 803 may alternatively be in another shape, for example, a circle or a hexagon.

On the element selection interface 800 shown in c in FIG. 10, the first terminal splits the first image into a plurality of areas. The user may select at least one area, and the first terminal determines an element in the at least one area as the target element.

It may be understood that, during actual application, the first terminal may alternatively determine the target element in the first image in another manner.

S902: When the first image is used as the wallpaper of the first screen, the first terminal determines whether a control on the first screen blocks the target element in the first image; and if the control on the first screen blocks the target element in the first image, performs S903; or if the control on the first screen does not block the target element in the first image, performs S907.

In some implementations, the first terminal may determine a location of the control on the first screen and a location of the target element in the first image. When the first image is used as the wallpaper of the first screen, and the location of the control on the first screen overlaps or partially overlaps the location of the target element in the first image, the first terminal determines that the control on the first screen blocks the target element in the first image. In some implementations, the location of the control on the first screen and the location of the target element in the first image may be relative locations corresponding to the first screen.

In some implementations, a coordinate system corresponding to the first screen may be established based on pixels of the first screen or a cell that is on the first screen and that is used to place a control. Any location on the first screen may be represented by using coordinates in the coordinate system. The location of the control on the first screen may be represented as a first coordinate set, and the location of the target element in the first image may be represented as a second coordinate set. If the first coordinate set and the second coordinate set include at least some same coordinates, it may be determined that the control on the first screen blocks the target element in the first image. If the first coordinate set and the second coordinate set do not include the same coordinates, it may be determined that the control on the first screen does not block the target element in the first image.

For example, the first screen may include five cells in a horizontal direction and may include eight cells in a vertical direction, and each cell may be used to place one control. If a coordinate set corresponding to the control on the first screen includes coordinates 1 (2, 3), it indicates that the control is located in a 2^{nd} cell in the horizontal direction and a 3^{rd} cell in the vertical direction. If a coordinate set corresponding to the target element in the first image includes coordinates 1 (2, 3) and coordinates 2 (2, 4), it indicates that the target element is located in a 2^{nd} cell in the horizontal direction and a 3^{rd} cell or a 4^{th} cell in the vertical direction. Because both the coordinate set corresponding to the control on the first screen and the coordinate set corresponding to the target element in the first image include the coordinates 1, it may be determined that the control on the first screen blocks the target element in the first image.

In some implementations, the first terminal may superimpose the first image on a screen layout of the first screen, to obtain a preview image of the first image on the first screen. When the control on the first screen blocks the target element in the first image, a target element in the preview image cannot be identified. When the control on the first screen does not block the target element in the first image, the preview image may include a complete and clear target element, so that the target element can be identified from the preview image. Therefore, if the preview image does not include the target element, it is determined that the control on the first screen blocks the target element in the first image. If the preview image includes the target element, it is determined that the control on the first screen does not block the target element in the first image.

S903: The first terminal obtains an image set, where the image set includes at least one image, and each image in the image set includes the target element.

In some implementations, the first terminal may identify some or all images stored in the first terminal, to obtain an image including the target element. And/or, in some other implementations, the first terminal may obtain, based on the target element, an image including the target element from another device (for example, a second terminal, a third terminal, or a server).

For example, the first terminal includes an album application, and the album application includes a local album stored in the first terminal and a cloud album stored in the server. The first terminal may provide the target element for the album application, and identify all or some images in the local album and/or the cloud album by using the album application, to obtain at least one image that includes the target element and that is returned by the album application.

S904: The first terminal determines a second image from the image set.

In some implementations, the first terminal may determine, in a similar or same manner of determining whether the control on the first screen blocks the target element in the first image, whether the control on the first screen blocks the target element in the at least one image in the image set, to determine the second image.

In some implementations, the first terminal may further determine whether the control on the first screen blocks the target element in any image in the image set, and whether an aspect ratio of the first screen matches an aspect ratio of the any image. If the control on the first screen does not block the target element in the any image, and the aspect ratio of the first screen matches the aspect ratio of the any image, the any image is determined as the second image, so that the control on the first screen does not block the target element in the second image, and the aspect ratio of the first screen matches the aspect ratio of the second image. This further improves a visual effect of the wallpaper.

In some implementations, that the aspect ratio of the first screen matches the aspect ratio of the any image may include: A difference between the aspect ratio of the first screen and the aspect ratio of the any image is less than or equal to a first value. In some implementations, that the aspect ratio of the first screen matches the aspect ratio of the any image may include: The aspect ratio of the first screen is the same as the aspect ratio of the any image. In some implementations, the first value may be a preset value. The first screen is used as an example. The aspect ratio of the first screen is a ratio of a quantity of pixels in a width direction of the first screen to a quantity of pixels in a height direction of the first screen.

In some implementations, the first terminal may further determine the second image from the image set based on sharpness of each image, so that the control on the first screen does not block the target element in the second image, and the second image has the highest sharpness.

S905: The first terminal displays a first interface, where the first interface includes a preview image of the second image on the first screen, the second image includes the target element, and when the second image is used as the wallpaper of the first screen, the control on the first screen does not block the target element in the second image.

A manner in which the first terminal performs S905 may be the same as or similar to a manner in which the first terminal performs S502.

For example, after determining the target element based on the element selection interface 800 shown in FIG. 10, the first terminal may display a first interface 603 shown in FIG. 7a to FIG. 7d.

S906: The terminal device sets the second image as the wallpaper of the first screen in response to a first confirmation operation.

A manner in which the first terminal performs S906 may be the same as or similar to a manner in which the first terminal performs S503.

S907: The first terminal sets the first image as the wallpaper of the first screen.

A manner in which the first terminal performs S907 may be the same as or similar to a manner in which the first terminal performs S504.

In this embodiment of this application, in response to the setting operation of setting the first image as the wallpaper of the first screen, the first terminal may identify the target element in the first image, and determine whether the control on the first screen blocks the target element in the first image. When the control on the first screen blocks the target element in the first image, at least one image that also includes the target element may be obtained, and the second image corresponding to the first screen is determined from the at least one image, so that a matching degree between the second image and the first screen can be improved, and an effect of setting the wallpaper can be further improved.

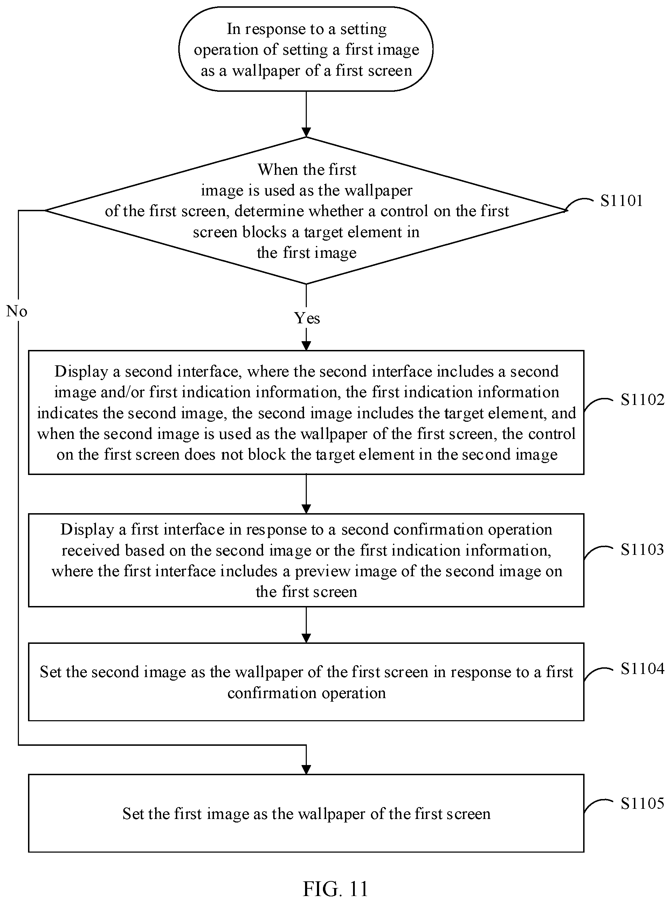

FIG. 11 is a flowchart of a wallpaper setting method according to an embodiment of this application. The method provides a detailed description of the method in FIG. 5. Before a preview image of a second image on a first screen is displayed to a user, the user may first perceive the second image. It should be noted that the method is not limited to a specific sequence described in FIG. 11 and below. It should be understood that, in another embodiment, a sequence of some steps in the method may be exchanged based on an actual requirement, or some steps in the method may be omitted or deleted. The method includes the following steps.

S1101: In response to a setting operation of setting a first image as a wallpaper of the first screen, when the first image is used as the wallpaper of the first screen, a first terminal determines whether a control on the first screen blocks a target element in the first image; and if the control on the first screen blocks the target element in the first image, performs S1102; or if the control on the first screen does not block the target element in the first image, performs S1105.

A manner in which the first terminal performs S1101 may be the same as or similar to a manner in which the first terminal performs S501.

S1102: The first terminal displays a second interface, where the second interface includes the second image and/or first indication information, the first indication information indicates the second image, the second image includes the target element, and when the second image is used as the wallpaper of the first screen, the control on the first screen does not block the target element in the second image.

When the setting operation of setting the first image as the wallpaper of the first screen is received and the control on the first screen blocks the target element in the first image, the second image or the first indication information indicating the second image may be first displayed to the user on the second interface, so that the user perceives the second image with a better visual effect that is recommended based on the current setting operation, and the user can further determine whether to proceed with setting the first image as the wallpaper of the first screen or set the recommended second image as the wallpaper of the first screen. This further improves user experience of setting the wallpaper.

In some implementations, the first indication information may include attribute information of the second image, for example, at least one of a geographical location corresponding to the second image, generation time of the second image, an identifier of the second image, a storage location of the second image, and a thumbnail of the second image. It may be understood that, during actual application, the first indication information may further include other information that can indicate the second image.

In some implementations, the second interface further includes a preview image of the first image on the first screen. In some implementations, the second image or the first indication information may be located at an upper layer of the preview image. When the second interface includes both the preview image and the second image and/or the first indication information, a wallpaper effect of the first image on the first screen can be displayed to the user, and the second image can also be perceived, so that the second interface is more associated with the setting operation in the foregoing step. This further improves user experience of setting the wallpaper.

In some implementations, the second interface may further include second indication information, to indicate to the user that the second image is a wallpaper recommended for the first screen.

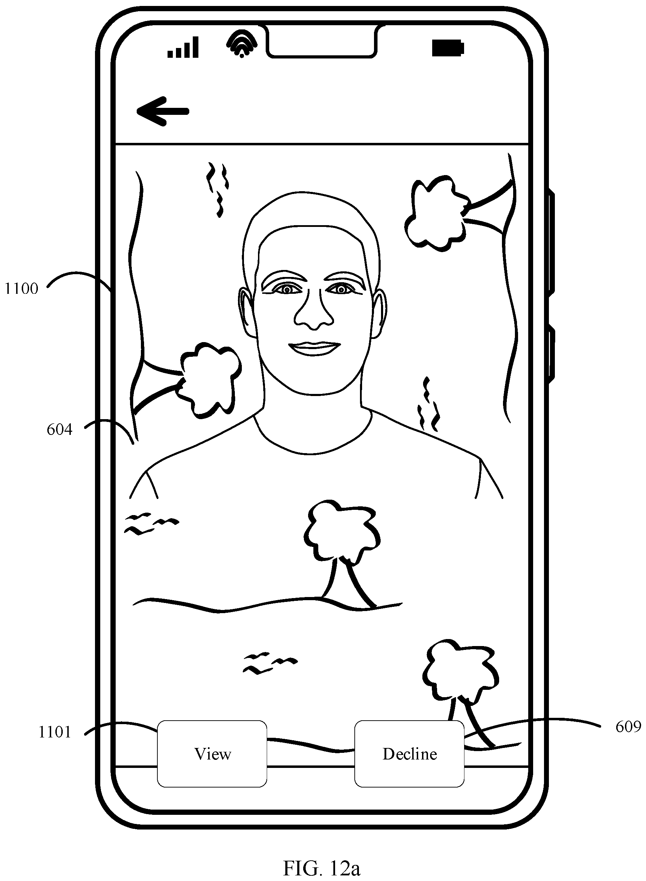

For example, when the first terminal receives a tap operation of the user on a "Wallpaper" option 602 on a wallpaper setting interface 600 shown in FIG. 6, and the control on the first screen blocks a facial region in a first image 601, the first terminal may display a second interface 1100, as shown in FIG. 12a to FIG. 12c.

For example, as shown in FIG. 12a, the second interface 1100 includes a second image 604, and further includes a "View" button 1101 and a "Decline" button 609.

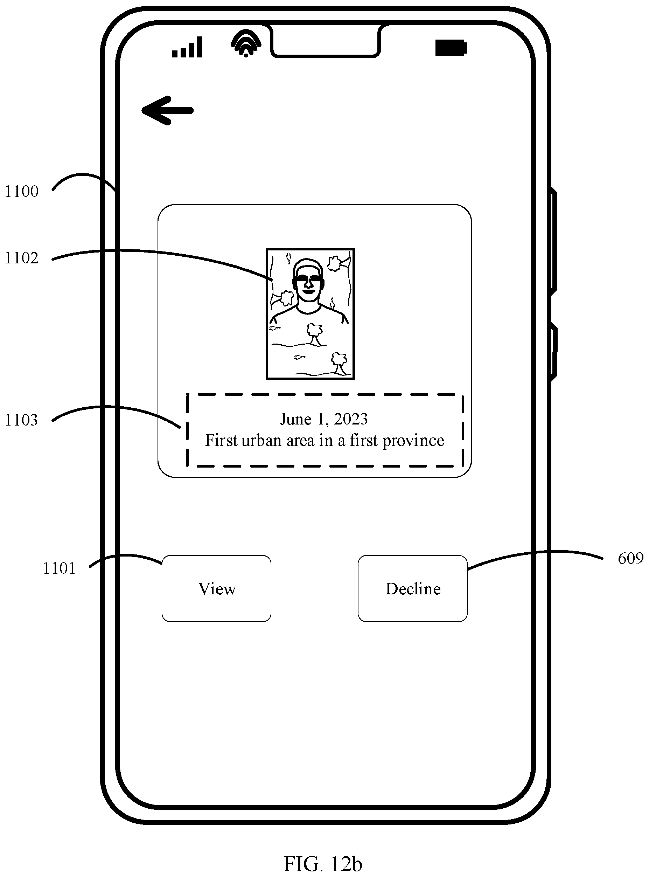

For example, as shown in FIG. 12b, the second interface 1100 includes a thumbnail 1102 of the second image 604 and first indication information 1103, and the first indication information 1103 includes: Generation time of the second image 604 is June 1, 2023, and a corresponding geographical location is a first urban area in a first province. The second interface 1100 further includes the "View" button 1101 and the "Decline" button 609.

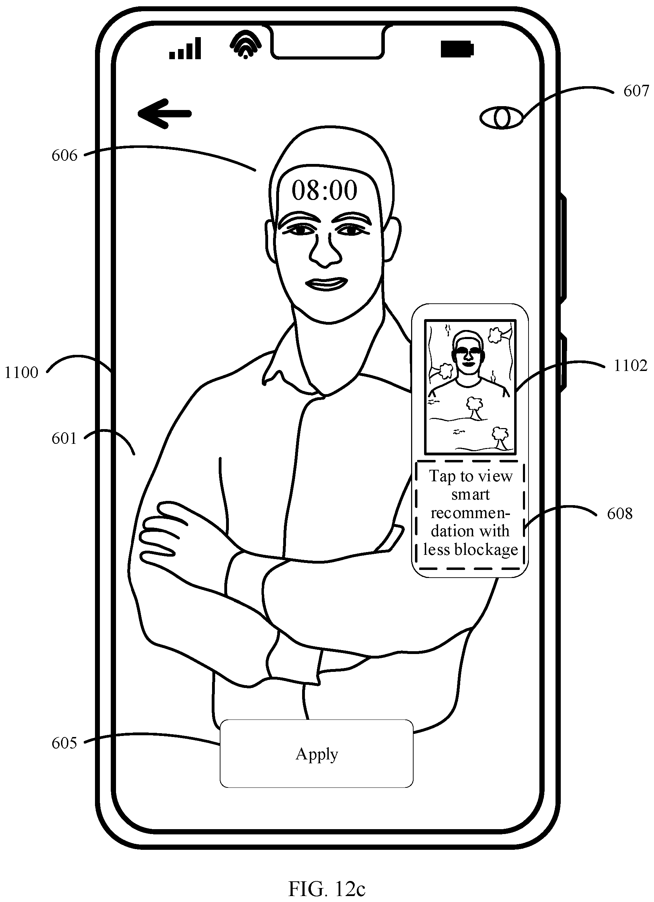

For example, as shown in FIG. 12c, the second interface 1100 includes a preview image of the first image 601 on the first screen, a time control 606, the thumbnail 1102 of the second image 604, and second indication information 608. The second indication information 608 includes "Tap to view smart recommendation with less blockage". The second interface 1100 further includes an "Apply" button 605 and a "Hide" button 607.

It may be understood that, during actual application, the second interface may also include more information related to the first image or the second image.

S1103: The first terminal displays a first interface in response to a second confirmation operation received based on the second image or the first indication information, where the first interface includes the preview image of the second image on the first screen.

The second confirmation operation may be used to trigger displaying of the first interface.

For example, if the first terminal receives a tap operation of the user on the "View" button 1101 shown in FIG. 12a or shown in FIG. 12b, or receives a tap operation of the user on the thumbnail 1102 of the second image 604 or the second indication information 608 shown in FIG. 12c, the first terminal may display a first interface 603 shown in FIG. 7a to FIG. 7d.

S1104: The first terminal sets the second image as the wallpaper of the first screen in response to a first confirmation operation.

A manner in which the first terminal performs S1104 may be the same as or similar to a manner in which the first terminal performs S503.

S1105: The first terminal sets the first image as the wallpaper of the first screen.

A manner in which the first terminal performs S1105 may be the same as or similar to a manner in which the first terminal performs S504.

For example, if receiving a tap operation of the user on the "Decline" button 609 shown in FIG. 12a or shown in FIG. 12b, the first terminal displays a sixth interface 611 shown in FIG. 8, to set the first image 601 as the wallpaper of the first screen on the sixth interface 611. Alternatively, if a tap operation of the user on the "Apply" button 605 shown in FIG. 12c is received, the first image 601 may be set as the wallpaper of the first screen.

In this embodiment of this application, in response to the setting operation of setting the first image as the wallpaper of the first screen, when it is determined that the first image is used as the wallpaper of the first screen and the control on the first screen blocks the target element in the first image, the second interface may be first displayed, to display the second image or the first indication information indicating the second image to the user, so that the user perceives the second image with a better visual effect that is recommended based on the current setting operation, and the user can further determine whether to proceed with setting the first image as the wallpaper of the first screen or set the recommended second image as the wallpaper of the first screen. This further improves user experience of setting the wallpaper.

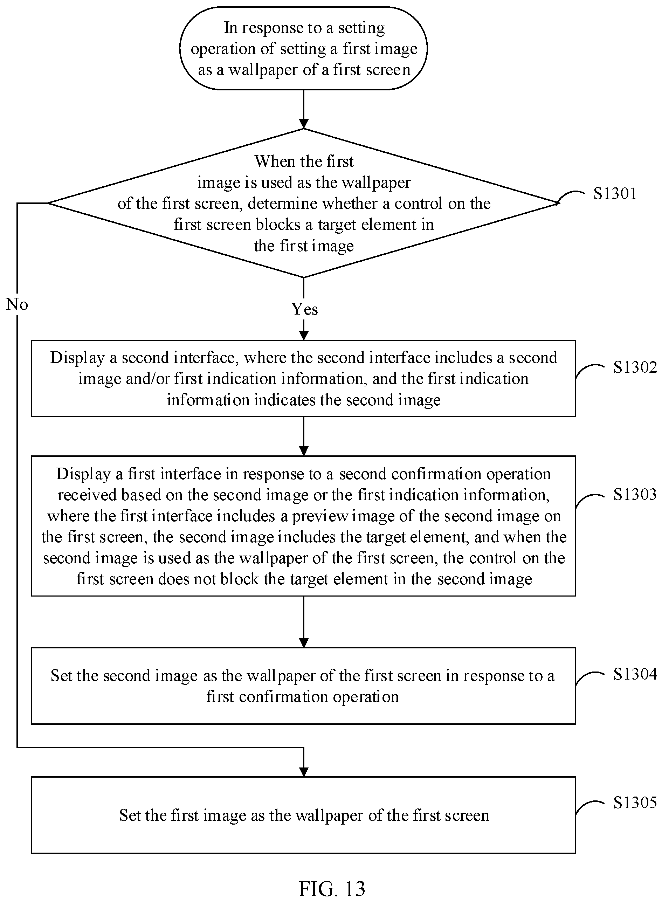

FIG. 13 is a flowchart of a wallpaper setting method according to an embodiment of this application. The method provides a detailed description of the method in FIG. 5. Before a preview image of a second image on a first screen is displayed to a user, a list of images may be first displayed to the user, so that the user determines the second image in the list of images. It should be noted that the method is not limited to a specific sequence described in FIG. 13 and below. It should be understood that, in another embodiment, a sequence of some steps in the method may be exchanged based on an actual requirement, or some steps in the method may be omitted or deleted. The method includes the following steps.

S1301: In response to a setting operation of setting a first image as a wallpaper of the first screen, when the first image is used as the wallpaper of the first screen, a first terminal determines whether a control on the first screen blocks a target element in the first image; and if the control on the first screen blocks the target element in the first image, performs S1302; or if the control on the first screen does not block the target element in the first image, performs S1305.

A manner in which the first terminal performs S1301 may be the same as or similar to a manner in which the first terminal performs S501.

S1302: The first terminal displays a third interface, where the third interface includes the list of images, the list of images includes the second image, each image in the list of images includes the target element, and when each image in the list of images is used as the wallpaper of the first screen, the control on the first screen does not block the target element in each image in the list of images.

In some implementations, the list of images may include a plurality of images. In some implementations, the plurality of images in the list of images may be sorted in a preset manner, and an image with a higher priority is placed closer to the beginning of the list. In some implementations, a priority of each image in the list of images may match a similarity between the image and the first image. A higher similarity between the image and the first image indicates a ranking of the image closer to the beginning of the list of images. In some implementations, the similarity between the image and the first image may include a similarity between image content of the image and image content of the first image, and/or a similarity between attribute information of the image and attribute information of the first image.

For example, if an image that is in the plurality of images in the list of images and whose generation time and corresponding geographical location are closer to those of the first image, it is more likely that the image and the first image are shot by the user in a same temporal and spatial scenario. Therefore, a ranking of the image may be closer to the beginning of the list of images, so that the user can determine the second image more quickly, to improve efficiency of determining the second image.

In some implementations, the third interface further includes a preview image of the first image on the first screen. In some implementations, the list of images may be located at the upper layer of the preview image. When the second interface includes both the preview image and the list of images, a wallpaper effect of the first image on the first screen can be displayed to the user, and the list of images can also be perceived, so that the second interface is more associated with the setting operation in the foregoing step. This further improves user experience of setting the wallpaper.

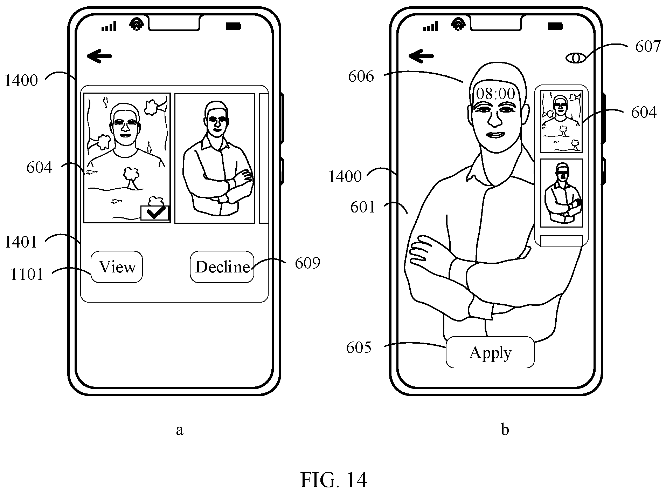

For example, when the first terminal receives a tap operation of the user on a "Wallpaper" option 602 on a wallpaper setting interface 600 shown in FIG. 6, and the control on the first screen blocks a facial region in a first image 601, the first terminal may display a third interface 1400, as shown in FIG. 14.

For example, as shown in a in FIG. 14, the third interface 1400 includes a list of images 1401, and the list of images 1401 includes a plurality of images including a second image 604. The third interface 1400 further includes a "View" button 1101 and a "Decline" button 609.

For example, as shown in b in FIG. 14, the third interface 1400 includes a preview image of the first image 601 on the first screen and the plurality of images including the second image 604. The third interface 1400 further includes an "Apply" button 605 and a "Hide" button 607.

S1303: The first terminal displays a first interface in response to a third confirmation operation received based on the second image, where the first interface includes the preview image of the second image on the first screen, the second image includes the target element, and when the second image is used as the wallpaper of the first screen, the control on the first screen does not block the target element in the second image.

The third confirmation operation may be used to trigger the first interface.

For example, when the second image 604 on the third interface 1400 shown in a in FIG. 14 is selected, if the first terminal receives a tap operation on the "View" button 1101, a first interface 603 shown in FIG. 7a to FIG. 7d may be displayed. Alternatively, when receiving a tap operation of the user on the second image 604 on the third interface 1400 shown in b in FIG. 14, the first terminal may display the first interface 603 shown in FIG. 7a to FIG. 7d.

S1304: The first terminal sets the second image as the wallpaper of the first screen in response to a first confirmation operation.

A manner in which the first terminal performs S1304 may be the same as or similar to a manner in which the first terminal performs S503.

S1305: The first terminal sets the first image as the wallpaper of the first screen.

A manner in which the first terminal performs S1305 may be the same as or similar to a manner in which the first terminal performs S504.

For example, if receiving a tap operation of the user on the "Decline" button 609 on the third interface 1400 shown in a in FIG. 14, the first terminal may display a sixth interface 611 shown in FIG. 8, to set the first image 601 as the wallpaper of the first screen on the sixth interface 611. Alternatively, if a tap operation of the user on the "Apply" button 605 shown in b in FIG. 14 is received, the first image 601 may be set as the wallpaper of the first screen.

In this embodiment of this application, in response to the setting operation of setting the first image as the wallpaper of the first screen, when it is determined that the first image is used as the wallpaper of the first screen and the control on the first screen blocks the target element in the first image, the list of images may be first displayed, to display at least one image such as the second image to the user, so that the user perceives the at least one image with a better visual effect that is recommended based on the current setting operation, and the user can further determine whether to proceed with setting the first image as the wallpaper of the first screen or select the recommended image from the list of images as the wallpaper of the first screen. This further improves user experience of setting the wallpaper.

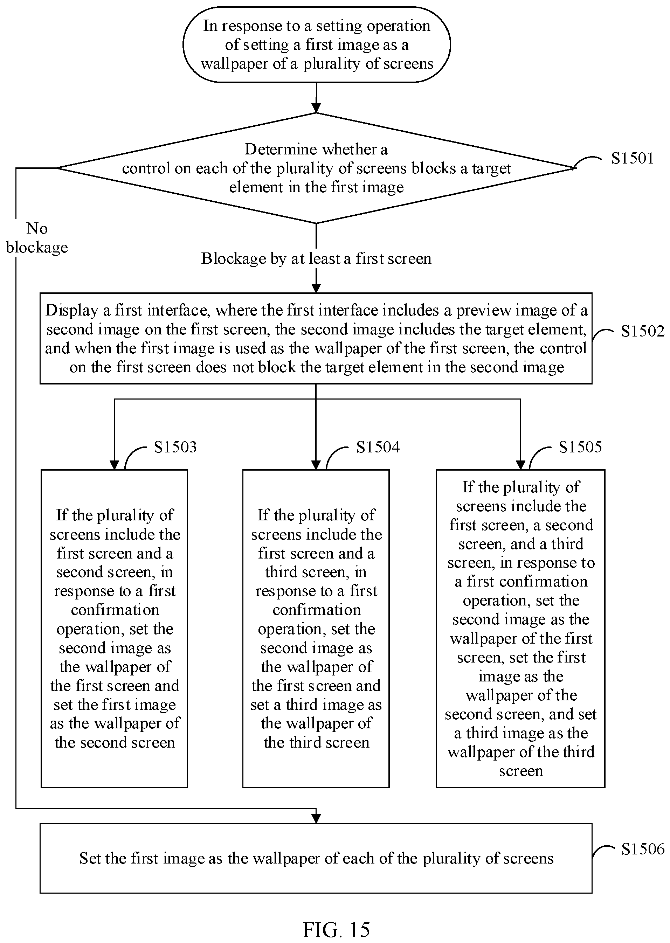

FIG. 15 is a flowchart of a wallpaper setting method according to an embodiment of this application. The method may be used by a first terminal to set a wallpaper of a plurality of screens. It should be noted that the method is not limited to a specific sequence described in FIG. 15 and below. It should be understood that, in another embodiment, a sequence of some steps in the method may be exchanged based on an actual requirement, or some steps in the method may be omitted or deleted. The method includes the following steps.

S1501: In response to a setting operation of setting a first image as the wallpaper of the plurality of screens, the first terminal determines whether a control on each of the plurality of screens blocks a target element in the first image; and if the control on at least the first screen included in the plurality of screens blocks the target element in the first image, performs S1502; or if the controls on the plurality of screens do not block the target element in the first image, performs S1506.

A manner in which the first terminal determines whether the control on each screen blocks the target element in the first image may be the same as or similar to the manner in which the first terminal determines whether the control on the first screen blocks the target element in the first image in S501 and S902.

In some implementations, any screen in the plurality of screens may be a screen of the first terminal or a screen of another terminal. In some implementations, for example, the any screen is the screen of the first terminal. The any screen may be a screen present when the first terminal is in a specific state. For example, the any screen may be a screen present when the first terminal is in any folded state, or the any screen may be a screen present when the first terminal is in a landscape display mode or a portrait display mode.

In some implementations, in addition to the first screen, the plurality of screens may include a second screen and/or a third screen. A control on the second screen does not block the target element in the first image, and a control on the third screen blocks the target element in the first image. In a possible case, a control on another screen other than the first screen in the plurality of screens does not block the target element in the first image. For example, the plurality of screens include the first screen and the second screen. Alternatively, in another possible case, the control on each of the plurality of screens blocks the target element in the first image. For example, the plurality of screens include the first screen and the third screen. Alternatively, in another possible case, in addition to the first screen, the plurality of screens include at least one screen on which a control blocks the target element in the first image, and at least one screen on which a control blocks the target element in the first image. For example, the plurality of screens include the first screen, the second screen, and the third screen.

In some implementations, the first screen is a screen present when the first terminal is in a first folded state, the second screen is a screen present when the first terminal is in a second folded state, and the third screen is a screen present when the first terminal is in a second folded state. It may be understood that the first folded state, the second folded state, and the third folded state are used to distinguish between states that may occur in a folding process of the first terminal, but are not used to limit a specific form of the first terminal. For example, the first folded state may be shown in b in FIG. 3. In this case, the first terminal is not yet folded or is just beginning to fold. The second folded state may be shown in c in FIG. 3. In this case, the first terminal is completely folded along a second folding line, but is not yet folded or is just beginning to fold along a first folding line. The third folded state may be shown in d in FIG. 3. In this case, the first terminal is completely folded along the first folding line and the second folding line.

In some implementations, any one of the first screen, the second screen, and the third screen is a screen present when the first terminal is in the landscape display mode, and another of the first screen, the second screen, and the third screen is a screen present when the first terminal is in the portrait display mode. Alternatively, any one of the first screen, the second screen, and the third screen is a screen present when the first terminal is in the portrait display mode, and another of the first screen, the second screen, and the third screen is a screen present when the first terminal is in the landscape display mode.

In some implementations, the first screen is a screen of the first terminal, the second screen is a screen of a second terminal, and the third screen is a screen of a third terminal.

S1502: The first terminal displays a first interface, where the first interface includes a preview image of a second image on the first screen, the second image includes the target element, and when the first image is used as a wallpaper of the first screen, a control on the first screen does not block the target element in the second image.

Because the control on at least the first screen included in the plurality of screens blocks the target element in the first image, at least the first interface may be displayed, and the preview image of the second image on the first screen is displayed on the first interface, so that a user previews at least a visual effect of using the second image as the wallpaper of the first screen.

In some implementations, after displaying the first interface, in response to a first switching operation, the first terminal may switch to display a fourth interface, where the fourth interface includes a preview image of the first image on the second screen. In some implementations, in response to a second switching operation, the first terminal may switch to display a fifth interface, where the fifth interface includes a preview image of a third image on the third screen, the third image includes the target element, and when the third image is used as a wallpaper of the third screen, a control on the third screen does not block the target element in the third image. The first switching operation may be used to trigger displaying of the fourth interface, and the second switching operation may be used to trigger displaying of the fifth interface. In other words, the first terminal may switch between the first interface, the fourth interface, and the fifth interface, to display a wallpaper effect of each of the plurality of screens to the user.

It should be noted that, for a manner in which the first terminal obtains the second image, refer to the detailed descriptions in S903 and S904. A manner in which the first terminal obtains the third image may be the same as or similar to the manner in which the first terminal obtains the second image. In some implementations, the second image and the third image may be a same image. In some implementations, an aspect ratio of the third image matches an aspect ratio of the third screen.

In some implementations, the fourth interface may include an identifier of the second screen, and the fifth interface may include an identifier of the third screen.

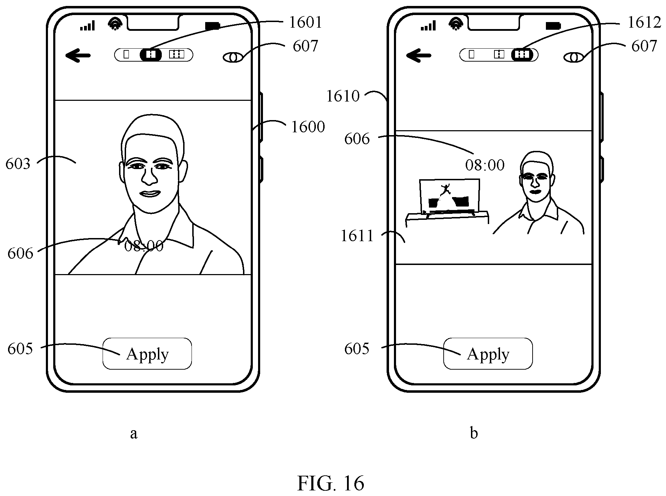

For example, during displaying of a first interface 603 shown in FIG. 7d, if receiving an operation of sliding rightward by the user, the first terminal may switch to display a fourth interface 1600 shown in a in FIG. 16. The fourth interface 1600 includes a first image 601, a time control 606, and an identifier 1601 of the second screen. The identifier 1601 of the second screen is a visually distinguished rectangular box whose aspect ratio is similar to that of the second screen and that includes a split line in the middle, and may indicate that the second screen is a screen in a half-folded state.

Alternatively, during displaying of the first interface 603 shown in FIG. 7d, if receiving an operation of sliding leftward by the user, the first terminal may switch to display a fifth interface 1610 shown in b in FIG. 16. The fifth interface 1610 includes a third image 1611, the time control 606, and an identifier 1612 of the second screen. The identifier 1612 of the third screen is a visually distinguished rectangular box whose aspect ratio is similar to that of the third screen and that includes two split lines in the middle, and may indicate that the third screen is a screen in an unfolded state.

In some implementations, during displaying of the fourth interface, the first terminal may adjust the first image in response to an editing operation of the user on the first image, to update the preview image of the first image on the second screen. For example, the first image is moved, scaled, rotated, or mirror-flipped. In some implementations, during displaying of the fifth interface, the first terminal may adjust the third image in response to an editing operation of the user on the third image, to update the preview image of the third image on the third screen. For example, the third image is moved, scaled, rotated, or mirror-flipped.

In some implementations, the first terminal may display a sixth interface in response to a third switching operation, and display the first interface in response to a fourth switching operation.

S1503: If the plurality of screens include the first screen and the second screen, in response to a first confirmation operation, the first terminal sets the second image as the wallpaper of the first screen and sets the first image as a wallpaper of the second screen.

For example, when the first terminal receives a tap operation of the user on an "Apply" button 605 on the first interface 603 shown in FIG. 7a to FIG. 7d, or receives a tap operation of the user on an "Apply" button 605 on the fourth interface 1600 shown in a in FIG. 16, the first terminal may determine that the first confirmation operation is received, set the second image as the wallpaper of the first screen, and set the first image as the wallpaper of the second screen.

In some implementations, if the plurality of screens include the first screen and the second screen, the first terminal may alternatively directly set the second image as the wallpaper of the first screen and set the first image as the wallpaper of the second screen, without performing the step on the displayed fourth interface in S1502 and the step of receiving the first confirmation operation in S1503.

In some implementations, if the second screen is a screen of another terminal, for example, the second terminal, the first terminal may indicate the second terminal to set the first image as the wallpaper of the second screen.

In some implementations, when a control on another screen other than the first screen in the plurality of screens blocks the target element in the first image, in response to the first confirmation operation, the first terminal may set the second image as the wallpaper of the first screen and set the first image as a wallpaper of the another screen in the plurality of screens.

S1504: If the plurality of screens include the first screen and the third screen, in response to the first confirmation operation, the first terminal sets the second image as the wallpaper of the first screen and sets the third image as the wallpaper of the third screen.

If the control on the third screen blocks the target element in the first image when the first image is used as the wallpaper of the third screen, the third image is obtained, where the third image includes the target element, and when the third image is used as the wallpaper of the third screen, the control on the third screen does not block the target element in the third image.

For example, when the first terminal receives a tap operation of the user on the "Apply" button 605 on the first interface 603 shown in FIG. 7a to FIG. 7d, or receives a tap operation of the user on an "Apply" button 605 on the fifth interface 1610 shown in b in FIG. 16, the first terminal may determine that the first confirmation operation is received, set the second image as the wallpaper of the first screen, and set the third image as the wallpaper of the third screen.

In some implementations, if the plurality of screens include the first screen and the third screen, the first terminal may alternatively directly set the second image as the wallpaper of the first screen and set the third image as the wallpaper of the third screen, without performing the step on the displayed fourth interface in S1502 and the step of receiving the first confirmation operation in S1504.

In some implementations, if the third screen is a screen of another terminal, for example, the third terminal, the first terminal may indicate the third terminal to set the third image as the wallpaper of the third screen.

In some implementations, when the control on each screen in the plurality of screens blocks the target element in the first image, the first terminal may obtain, for each screen in response to the first confirmation operation, a new image that includes the target element and in which the target element is not blocked by the screen, and set the newly obtained image as a wallpaper of the screen, but not set the first image as a wallpaper of any of the plurality of screens.

S1505: If the plurality of screens include the first screen, the second screen, and the third screen, in response to the first confirmation operation, the first terminal sets the second image as the wallpaper of the first screen, sets the first image as a wallpaper of the second screen, and sets the third image as the wallpaper of the third screen.

For example, when the first terminal receives a tap operation of the user on the "Apply" button 605 on the first interface 603 shown in FIG. 7a to FIG. 7d, or receives a tap operation of the user on the "Apply" button 605 on the fourth interface 1600 shown in a in FIG. 16, or receives a tap operation of the user on the "Apply" button 605 on the fifth interface 1610 shown in b in FIG. 16, the first terminal may determine that the first confirmation operation is received, set the second image as the wallpaper of the first screen, set the first image as the wallpaper of the second screen, and set the third image as the wallpaper of the third screen.

In some implementations, if the plurality of screens include the first screen, the second screen, and the third screen, the first terminal may alternatively directly set the second image as the wallpaper of the first screen, set the first image as the wallpaper of the second screen, and set the third image as the wallpaper of the third screen, without performing the step on the displayed fourth interface in S1502 and the step of receiving the first confirmation operation in S1505.

In some implementations, when controls on some of the plurality of screens block the target element in the first image, and controls on the other screens do not block the target element in the first image, the first terminal may obtain, for each screen in the some screens in response to the first confirmation operation, a new image that includes the target element and in which the target element is not blocked by the screen, and set the newly obtained image as a wallpaper of the screen, and for each screen in the other screens, set the first image as a wallpaper of each screen.

S1506: The first terminal sets the first image as a wallpaper of each of the plurality of screens.

Because the control on each screen included in the plurality of images does not block the target element in the first image, the first image may be directly set as the wallpaper of each of the plurality of screens.

In this embodiment of this application, in response to the setting operation of setting the first image as the wallpaper of the plurality of screens, if the control on at least the first screen included in the plurality of screens blocks the target element in the first image, the first terminal displays the first interface, and displays, to the user on the first interface, the preview image of the second image on the first screen. In addition, in response to the first confirmation operation and based on a situation in which the controls on the plurality of screens block the target element in the first image, a corresponding response manner may be used: If the plurality of screens include the first screen and the second screen, in response to the first confirmation operation, the first terminal sets the second image as the wallpaper of the first screen and sets the first image as the wallpaper of the second screen; or if the plurality of screens include the first screen and the third screen, in response to the first confirmation operation, the first terminal sets the second image as the wallpaper of the first screen and sets the third image as the wallpaper of the third screen; or if the plurality of screens include the first screen, the second screen, and the third screen, in response to the first confirmation operation, the first terminal sets the second image as the wallpaper of the first screen, sets the first image as the wallpaper of the second screen, and sets the third image as the wallpaper of the third screen, so that a wallpaper can be set for each of the plurality of screens, and a target element on each screen is not blocked by the control on the screen. This not only improves efficiency of setting the wallpaper, but also improves efficiency of setting the wallpaper and user experience. This allows the user to set an image of interest as the wallpaper of the plurality of screens at once and view an area of interest on each of plurality of screens.

Based on a same inventive concept, in an implementation of the foregoing method, an embodiment of this application provides a wallpaper setting apparatus. The apparatus embodiment corresponds to the foregoing method embodiment. For ease of reading, details in the foregoing method embodiment are not described one by one in the apparatus embodiment. However, it should be clarified that the apparatus in this embodiment can correspondingly implement all content in the foregoing method embodiment.

In some implementations, the apparatus may include:
a display module, configured to: in response to a setting operation of setting a first image as a wallpaper of a first screen, if a control on the first screen blocks a target element in the first image when the first image is used as the wallpaper of the first screen, display a first interface, where the first interface includes a preview image of a second image on the first screen, the second image includes the target element, and when the second image is used as the wallpaper of the first screen, the control on the first screen does not block the target element in the second image; and
a setting module, configured to set the second image as the wallpaper of the first screen in response to a first confirmation operation.

In some implementations, the apparatus may implement one or more steps performed by the first terminal.

Based on a same inventive concept, an embodiment of this application further provides a terminal device. The terminal device includes a memory and a processor, where the memory is configured to store a computer program, and when the computer program is invoked, the processor is configured to perform the method in the foregoing method embodiments.

The terminal device provided in this embodiment may perform the foregoing method embodiments. Implementation principles and technical effects thereof are similar. Details are not described herein again.

Based on a same inventive concept, an embodiment of this application further provides a chip system. The chip system includes a processor, the processor is coupled to a memory, and the processor executes a computer program stored in the memory, to implement the method in the foregoing method embodiments.

The chip system may be a single chip or a chip module including a plurality of chips.

An embodiment of this application further provides a computer-readable storage medium, where the computer-readable storage medium stores a computer program, and when the computer program is executed by a processor, the method in the foregoing method embodiments is implemented.

An embodiment of this application further provides a computer program product, where when the computer program product runs on a terminal device, the terminal device is caused to implement the method in the foregoing method embodiments.

When the foregoing integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry computer program code to a terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk drive, a magnetic disk, or a compact disc.

In the foregoing embodiments, descriptions of each embodiment have respective focuses. For a part that is not described in detail or recorded in an embodiment, refer to related descriptions in another embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In embodiments provided in this application, it should be understood that the disclosed apparatus/device and method may be implemented in other manners. For example, the described apparatus/device embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in descriptions of the specification of this application and the appended claims, the terms "first", "second", "third", and the like are merely used for distinguishing descriptions, but cannot be understood as indicating or implying relative importance.

Reference to "one embodiment", "some embodiments", or the like described in the specification of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely used to describe the technical solutions of this application, but not to limit the technical solutions. Although this application is described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A wallpaper setting method, wherein the method comprises:
in response to a setting operation of setting a first image as a wallpaper of a first screen, if a control on the first screen blocks a target element in the first image when the first image is used as the wallpaper of the first screen, displaying a first interface, wherein the first interface comprises a preview image of a second image on the first screen, the second image comprises the target element, and when the second image is used as the wallpaper of the first screen, the control on the first screen does not block the target element in the second image; and
setting the second image as the wallpaper of the first screen in response to a first confirmation operation.

2. The method according to claim 1, wherein in response to the setting operation of setting the first image as the wallpaper of the first screen, if the control on the first screen blocks the target element in the first image when the first image is used as the wallpaper of the first screen, displaying the first interface comprises:
in response to the setting operation, if the control on the first screen blocks the target element in the first image when the first image is used as the wallpaper of the first screen, displaying a second interface, wherein the second interface comprises the second image and/or first indication information, and the first indication information indicates the second image; and
displaying the first interface in response to a second confirmation operation received based on the second image or the first indication information.

3. The method according to claim 2, wherein the second interface further comprises a preview image of the first image on the first screen.

4. The method according to claim 1, wherein in response to the setting operation of setting the first image as the wallpaper of the first screen, if the control on the first screen blocks the target element in the first image when the first image is used as the wallpaper of the first screen, displaying the first interface comprises:
in response to the setting operation, if the control on the first screen blocks the target element in the first image when the first image is used as the wallpaper of the first screen, displaying a third interface, wherein the third interface comprises a list of images, the list of images comprises the second image, each image in the list of images comprises the target element, and when each image in the list of images is used as the wallpaper of the first screen, the control on the first screen does not block the target element in each image in the list of images; and
displaying the first interface in response to a third confirmation operation received based on the second image.

5. The method according to any one of claims 1 to 4, wherein the target element comprises at least a part of facial features.

6. The method according to any one of claims 1 to 5, wherein the setting operation is further used to set the first image as a wallpaper of a second screen, and when the first image is used as the wallpaper of the second screen, a control on the second screen does not block the target element in the first image; and the method further comprises:
setting the first image as the wallpaper of the second screen in response to the first confirmation operation.

7. The method according to claim 6, wherein after displaying the first interface, the method further comprises:
in response to a first switching operation, switching to display a fourth interface, wherein the fourth interface comprises the preview image of the first image on the second screen.

8. The method according to any one of claims 1 to 7, wherein the setting operation is further used to set the first image as a wallpaper of a third screen; and the method further comprises:
in response to the setting operation, if a control on the third screen blocks the target element in the first image when the first image is used as the wallpaper of the third screen, obtaining a third image, wherein the third image comprises the target element, and when the third image is used as the wallpaper of the third screen, the control on the third screen does not block the target element in the third image; and
setting the third image as the wallpaper of the third screen in response to the first confirmation operation.

9. The method according to claim 8, wherein after displaying the first interface, the method further comprises:
in response to a second switching operation, switching to display a fifth interface, wherein the fifth interface comprises a preview image of the third image on the third screen.

10. The method according to any one of claims 1 to 9, wherein the method comprises:
identifying the target element in the first image; or
obtaining the target element selected by a user from the first image.

11. The method according to any one of claims 1 to 10, wherein a difference between an aspect ratio of the first screen and an aspect ratio of the second image is less than or equal to a first value.

12. A terminal device, comprising a memory and a processor, wherein the memory is configured to store a computer program, and when the computer program is invoked, the processor is configured to perform the method according to any one of claims 1 to 11.

13. A computer-readable storage medium, wherein the computer-readable storage medium stores a computer program, and when the computer program is executed by a processor, the method according to any one of claims 1 to 11 is implemented.

14. A computer program product, wherein when the computer program product runs on a terminal device, the terminal device is caused to perform the method according to any one of claims 1 to 11.
